# EUROPEAN PATENT APPLICATION

(11) **EP 4 207 539 A1**
(43) Date of publication of application: **05.07.2023**
(21) Application number: 21880479.7
(22) Date of filing: 12.10.2021
(51) Int. Cl.: H02J 7/00, H01M 10/48, G08B 21/18, B60L 58/18, H01M 10/42

(54) **APPARATUS FOR MANAGING BATTERY PACK**

(30) Priority: 13.10.2020 KR 20200132069
(71) Applicant: LG Energy Solution, Ltd., Seoul 07335 (KR)
(72) Inventor: KIM, Duk-You, Daejeon 34122 (KR)
(74) Representative: Hoffmann Eitle
(86) International application number: PCT/KR2021/014045
(87) International publication number: WO 2022/080832

(57) **Abstract**

Disclosed is a battery pack managing apparatus configured to manage a battery pack configured to be mountable to various applications so that the battery pack is efficiently managed for each application. The battery pack managing apparatus manages a battery pack configured to include at least one secondary battery and supply a power to the outside through a power supply path, and includes a switching module provided on the power supply path and configured to selectively turn on/off the power supply path; a communication module configured to communicate with a portable terminal and receive usage information of the battery pack from the portable terminal; and a processor configured to change a setting value of at least one of voltage, current and temperature preset for the battery pack based on the usage information received by the communication module and control the switching module according to the changed setting value.

## Description

### TECHNICAL FIELD

The present application claims priority to Korean Patent Application No. 10-2020-0132069 filed on October 13, 2020 in the Republic of Korea, the disclosures of which are incorporated herein by reference.

The present disclosure relates to battery technology, and more specifically, to a technology for effectively managing a battery pack configured to be usable in various forms appropriately for each use form.

### BACKGROUND ART

Currently commercialized secondary batteries include nickel-cadmium batteries, nickel-hydrogen batteries, nickel-zinc batteries, lithium secondary batteries, and the like. Among them, the lithium secondary batteries are spotlighted because they ensure free charging and discharging due to substantially no memory effect compared to nickel-based secondary batteries, as well as very low discharge rate and high output and energy density.

The lithium secondary battery mainly uses lithium-based oxide and carbon material as positive electrode active material and negative electrode active material, respectively. The lithium secondary battery includes an electrode assembly in which a positive electrode plate and a negative electrode plate respectively coated with a positive electrode active material and a negative electrode active material are arranged with a separator interposed therebetween, and an exterior, namely a battery case, for hermetically receiving the electrode assembly together with electrolyte.

In general, according to the shape of an exterior, lithium secondary batteries may be classified into a can-type secondary battery in which an electrode assembly is included into a metal can and a pouch-type secondary battery in which an electrode assembly is included in a pouch of an aluminum laminate sheet.

Secondary batteries have been widely used to supply a driving power to portable terminals such as smartphones and laptop computers for several decades, and recently, as the development and distribution of electric vehicles expand, the secondary batteries are recognized as a very important part as a driving energy source that enables electric vehicles to move. In particular, since high output and capacity are required to drive an electric vehicle, the secondary battery is not used alone, but a large number of secondary batteries are connected in series and/or parallel to each other to constitute one high-voltage battery pack and, the battery pack is used in the form of being mounted to the electric vehicle.

The battery pack for supplying a driving power for moving a vehicle as described above may be configured to be attachable to and detachable from the vehicle. Moreover, due to the vitalization of the shared e-mobility business, the battery pack may be configured so as to be easily mounted to and detached from the vehicle by not only a professional engineer but also a general driver.

In addition, recently, the battery pack is mounted as a driving power of various transportation means other than a vehicle more and more. For example, in many cases, transportation means for transporting people such as electric motorcycles, electric bicycles, electric scooters and electric wheels are driven with a power supplied from the battery pack.

However, most of the battery packs developed so far are mainly targeted for power supply, and namely their applications are limited to specific types. For example, a vehicle battery pack is configured to be usable when being mounted to a specific type of vehicle, and its use for other purposes is limited. In particular, battery packs are inevitably operated with different specifications such as voltage and current magnitudes for each application type. However, until now, the battery pack managing technology implemented to enable operation by changing the specifications suitable for each of various use types has not been properly prepared.

### DISCLOSURE

### Technical Problem

The present disclosure is designed to solve the problems of the related art, and therefore the present disclosure is directed to providing a battery pack managing apparatus configured to manage a battery pack configured to be mountable to various applications so that the battery pack is efficiently managed for each application, and a battery pack and a vehicle including the same.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

In one aspect of the present disclosure, there is provided a battery pack managing apparatus, which manages a battery pack configured to include at least one secondary battery and supply a power to the outside through a power supply path, the battery pack managing apparatus comprising: a switching module provided on the power supply path and configured to selectively turn on/off the power supply path; a communication module configured to communicate with a portable terminal and receive usage information of the battery pack from the portable terminal; and a processor configured to change a setting value of at least one of voltage, current and temperature preset for the battery pack based on the usage information received by the communication module and control the switching module according to the changed setting value.

Here, the communication module may be configured to receive information on whether the battery pack is in a mounted use, as the usage information of the battery pack.

In addition, the communication module may be configured to receive information on the type of a transportation means to which the battery pack is mounted, as the usage information of the battery pack.

In addition, when the usage information of the battery pack received by the communication module is a non-mounted use, the processor may be configured to set the setting value of the at least one of voltage, current and temperature to be lower than the case of the mounted use.

In addition, the processor may be configured to change a maximum allowable value for the at least one of voltage, current and temperature, based on the usage information.

In addition, the processor may be configured to change the setting value in a state where the switching module is turned off, and turn on the switching module after the setting value is changed.

In addition, the communication module may be configured to detect a relative distance change between the battery pack and the portable terminal.

In addition, the processor may be configured to turn off the switching module, when the relative distance change between the battery pack and the portable terminal is equal to or greater than a criterion change amount.

In addition, the communication module may be configured to transmit warning information to the portable terminal, when the relative distance change between the battery pack and the portable terminal is equal to or greater than a criterion change amount.

In addition, when the battery pack may be configured to be mounted to a transportation means that includes a control unit configured to communicate with the communication module, the processor is configured to control the switching module based on a signal of the control unit.

In addition, when the transportation means to which the battery pack is mounted does not include a control unit capable of communicating with the communication module or the battery pack is used without being mounted to the transportation means, the processor may be configured to control the switching module based on a signal of the portable terminal.

In addition, in another aspect of the present disclosure, there is provided a battery pack, comprising the battery pack managing apparatus according to the present disclosure.

In addition, in still another aspect of the present disclosure, there is provided a vehicle, comprising the battery pack managing apparatus according to the present disclosure.

### Advantageous Effects

According to an embodiment of the present disclosure, in a situation where a battery pack is used in various types, it is possible to effectively manage the battery pack appropriately for each type.

In particular, according to an embodiment of the present disclosure, even if battery packs are mounted to different transportation devices such as vehicles, motorcycles, electric bicycles, electric scooters, and electric wheels, charging and discharging of the battery packs may be appropriately controlled according to each mounting target.

In addition, according to an embodiment of the present disclosure, the battery pack may be configured to be utilized alone in the form of a mobile power without being mounted to a specific transportation device, and in this case, so that the charging and discharging of the battery pack may be appropriately controlled. Therefore, the battery pack to which the battery pack managing apparatus according to the present disclosure is applied may be mounted to an electric vehicle and used as a driving power, and in a situation where a commercial power is not easily supplied, for example in a place such as a camping site, the battery pack may be separated from the vehicle and used as an electronic product for camping to properly supply and control power.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a block diagram schematically showing a functional configuration of a battery pack managing apparatus according to an embodiment of the present disclosure.
FIG. 2 is a diagram schematically showing a configuration of a battery pack including the battery pack managing apparatus according to an embodiment of the present disclosure.
FIG. 3 is a diagram schematically showing an example of a configuration for detecting the change of a relative distance between the battery pack and a portable terminal by a communication module of the battery pack managing apparatus according to an embodiment of the present disclosure.
FIG. 4 is a diagram schematically showing an example of a configuration and operation of the battery pack managing apparatus according to an embodiment of the present disclosure, when the battery pack is mounted to a transportation means.
FIG. 5 is a diagram schematically showing another example of a configuration and operation of the battery pack managing apparatus according to an embodiment of the present disclosure, when the battery pack is mounted to a transportation means.
FIG. 6 is a diagram schematically showing still another example of a configuration and operation of the battery pack managing apparatus according to an embodiment of the present disclosure, when the battery pack is in non-mounted use.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

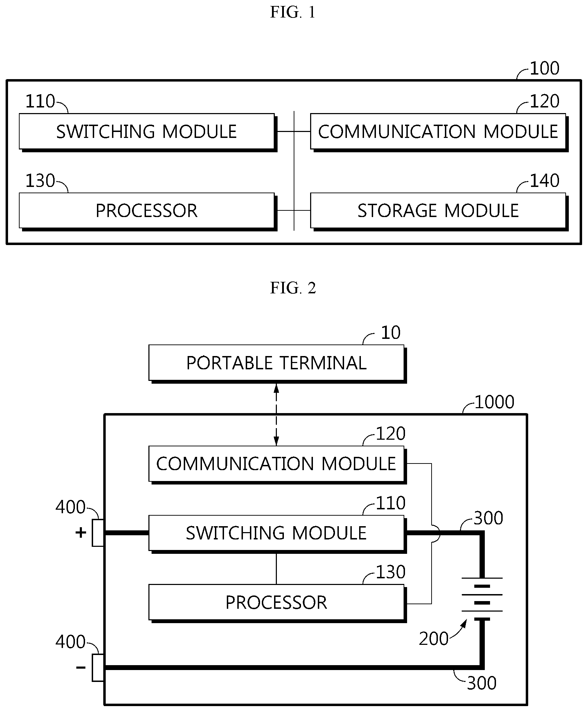

FIG. 1 is a block diagram schematically showing a functional configuration of a battery pack managing apparatus 100 according to an embodiment of the present disclosure, and FIG. 2 is a diagram schematically showing a configuration of a battery pack 1000 including the battery pack managing apparatus 100 according to an embodiment of the present disclosure.

Referring to FIGS. 1 and 2, the battery pack managing apparatus 100 according to the present disclosure is an apparatus for managing a battery pack 1000 including at least one secondary battery 200. Moreover, the battery pack 1000 may further include a power supply path 300 and a power supply terminal 400 together with the battery pack managing apparatus 100 and the secondary battery 200.

The secondary battery 200 may include an electrode assembly, an electrolyte and an exterior. Here, the electrode assembly is an assembly of an electrode and a separator, and may be configured in a form in which at least one positive electrode plate and at least one negative electrode plate are disposed with a separator interposed therebetween. In addition, each electrode plate of the electrode assembly may include an electrode tab to be connected to an electrode lead. The secondary battery 200 may include a pouch-type secondary battery whose exterior is in the form of an aluminum pouch sheet and/or a can-type secondary battery whose exterior is in the form of a metal can. Moreover, when the battery pack 1000 according to the present disclosure is mounted to a vehicle and serves as a vehicle battery pack for supplying a driving power to the vehicle, high output and/or high capacity are required, so a plurality of secondary batteries 200 connected in series and/or in parallel may be included in the battery pack 1000. In addition, the secondary battery 200 may store and discharge a driving energy through repeated charging and discharging. The present disclosure is not limited by such a specific shape or configuration of the secondary battery 200, and various secondary batteries known at the time of filing of this application may be employed in the present disclosure.

The power supply path 300 may be connected to both ends of the secondary battery 200 to provide a path through which a charging and discharging current for charging or discharging the secondary battery 200 flows. In particular, since the battery pack 1000 includes the power supply terminal 400, the power supply path 300 may be connected between the power supply terminal 400 and the secondary battery 200 to provide a path through which a charging power or a discharging power is provided between the secondary battery 200 and the power supply terminal 400. The power supply path 300 may employ various power supply types known at the time of filing of this application, such as a wire, a metal plate, a printed conductor, and the like, which includes an electric conductive material.

The power supply terminal 400 is a component of the battery pack 1000 to be electrically connected to the outside, and may be configured to be connectable to an external device or a connection cable for connection to the external device. For example, the power supply terminal 400 may be configured to be connectable to a connection terminal of a vehicle, and may be configured to be electrically connected to a motor, an electric component, or an auxiliary battery of the vehicle. For example, when the power supply terminal 400 and the connection terminal of the vehicle are connected, the driving power supplied from the secondary battery 200 may be supplied to the motor of the vehicle through the power supply path 300, the power supply terminal 400 and the connection terminal. The power supply terminal 400 is a terminal of the battery pack, which is configured to be connected to the connection terminal of the external device, and may be configured in a form corresponding to the connection terminal of the external device, for example in the form of an outlet or a plug.

As shown in FIGS. 1 and 2, the battery pack managing apparatus 100 according to the present disclosure may include a switching module 110, a communication module 120 and a processor 130.

The switching module 110 may be provided on the power supply path 300. In addition, the switching module 110 may be configured to be opened and closed to selectively turn on/off the power supply path 300. For example, when the switching module 110 is turned on, the power supply path 300 may be connected so that a power is supplied from the secondary battery 200 to the power supply terminal 400. Meanwhile, when the switching module 110 is turned off, the power supply path 300 is cut off so that a power may not be supplied from the secondary battery 200 to the power supply terminal 400. The switching module 110 may employ various switching devices or components known at the time of filing of this application. For example, the switching module 110 may be implemented using a MOSFET (Metal Oxide Semiconductor Field Effect Transistor) or an electromagnetic relay.

The communication module 120 may be configured to communicate with the portable terminal 10. Here, the portable terminal 10 may refer to a terminal configured to be carried by a user and to allow communication, like a smartphone, a laptop computer, or a smart pad of the user. In addition, the communication module 120 may be configured to transmit or receive information with the portable terminal 10 in various communication methods. For example, the communication module 120 may transmit or receive information to/from the portable terminal 10 in a wired communication or wireless communication method. Moreover, the communication module 120 may be configured to communicate with the portable terminal 10 in a communication method such as CAN (Controller Area Network) communication, Bluetooth, Zigbee, or Wi-Fi. The present disclosure is not limited by such a specific communication method with the portable terminal 10 of the communication module 120, and the communication module 120 may communicate with the portable terminal 10 by adopting various communication methods known at the time of filing of this application.

The communication module 120 may be configured to receive usage information of the battery pack 1000 from the portable terminal 10 through communication with the portable terminal 10. Here, the usage information of the battery pack 1000 may include information on the type of a target to which the battery pack 1000 is mounted and/or the type in which the battery pack 1000 is utilized.

The communication module 120 may be configured to provide various selection information related to the usage information of the battery pack 1000 to the portable terminal 10. Here, the selection information is a plurality of items or elements proposed as the usage information of the battery pack, and the portable terminal 10 may be configured to select at least some of them. In this case, the portable terminal 10 may be configured to provide the selection information to the user so that the user directly inputs and selects a specific item or element, so that the input information is provided to the communication module 120. Alternatively, the portable terminal 10 may be configured to select a specific item or element through its own pre-stored information or programmed information and provide the same to the communication module 120.

The processor 130 may be configured to receive the usage information received by the communication module 120 from the communication module 120. In addition, the processor 130 may be configured to change a setting value required to manage charging and/or discharging of the battery pack 1000 based on the usage information received by the communication module 120. In this specification, the term `configured to be' with respect to the processor 130 and the like may include the meaning of `programmed to be'.

In particular, values for voltage, current and/or temperature may be preset and stored in the battery pack 1000 in order to properly manage charging and discharging of the battery pack 1000. In this case, the processor 130 may be configured to change the setting value preset for the battery pack 1000, particularly the setting value for at least one of voltage, current and temperature of the battery pack 1000, based on the usage information of the battery pack 1000 received by the communication module 120.

For example, the processor 130 may be configured to increase or decrease a setting value for magnitudes of a charging and discharging voltage and a charging and discharging current of the battery pack 1000 based on the usage information of the battery pack 1000 selected by the user. Alternatively, the processor 130 may be configured to change a setting value for an appropriate operating temperature range of the battery pack 1000 based on the usage information of the battery pack 1000 selected by the portable terminal 10 itself.

In addition, the processor 130 may be configured to control the switching module 110 according to the setting value changed in this way. For example, the processor 130 may control the switching module 110 to turn on/off so that the charging and discharging current flows within a current range set to be changed based on the usage information selected by the portable terminal 10. As a more specific example, when the charging and discharging current is out of a specific range, the processor 130 may turn off the switching module 110 so that the current does not flow in the power supply path 300. Alternatively, the processor 130 may be configured to control the magnitude of current or voltage flowing through the battery pack 1000 by PWM (Pulse Width Modulation) control using the switching module 110. Alternatively, the battery pack managing apparatus 100, the battery pack 1000 or the switching module 110 according to the present disclosure may be configured to further include a transformer circuit. In this case, the processor 130 may be configured to control the magnitude of an output voltage of the battery pack 1000 by controlling the transformer circuit.

According to this configuration of the present disclosure, charging and discharging of the battery pack 1000 may be appropriately controlled according to the usage form of the battery pack 1000. In particular, according to this configuration of the present disclosure, information on how the battery pack 1000 is utilized may be transmitted from the portable terminal 10 to the battery pack managing apparatus 100. Therefore, the user may be possible to select the usage form of the battery pack 1000. In addition, according to this configuration of the present disclosure, voltage, current and/or temperature may be effectively controlled in a suitable manner according to the usage form of the battery pack 1000.

Meanwhile, the processor 130 may optionally include central processing units (CPUs), application-specific integrated circuits (ASIC), chipsets, logic circuits, registers, communication modems, data processing devices, or the like, known in the art, to execute various control logics performed in the present disclosure, or may be expressed using these terms. In addition, when a control logic is implemented in software, the processor 130 may be implemented as a set of program modules. In this case, the program module may be stored in a memory and executed by the processor 130. The memory may be provided inside or outside the processor 130, and may be connected to the processor 130 through various well-known means. Moreover, the battery pack often includes a control device referred to using terms such as MCU (Micro Controller Unit) or BMS (Battery Management System). The processor 130 may also be implemented using components such as MCU or BMS provided in such a general battery pack.

In addition, as shown in FIG. 1, the battery pack managing apparatus 100 according to the present disclosure may further include a storage module 140.

The storage module 140 may store programs and data necessary for each component of the battery pack managing apparatus 100 according to the present disclosure to perform its function. For example, the storage module 140 may be configured to store the setting value for at least one of voltage, current and temperature preset for the battery pack 1000. Alternatively, the storage module 140 may be configured to store data or programs necessary for the processor 130 to change the setting value or control the switching module 110, and data or programs for the communication module 120 to perform communication. In addition, the storage module 140 may be electrically connected to the communication module 120 or the processor 130 so that these components may store data or read the stored data.

Also, the communication module 120 may be configured to receive information on whether the battery pack 1000 is used in a mounted state or not, as the usage information of the battery pack 1000. That is, the communication module 120 may be configured to receive information on whether the battery pack 1000 will be used in a state of being mounted to a specific external device or whether the battery pack 1000 will be used in a state of being not mounted to a specific external device. Here, the case where the battery pack 1000 is used in a state of being mounted to a specific external device is a case where the battery pack 1000 is used in a state of being mounted to a transportation means such as a vehicle, and may be referred to as mounted use. In addition, the case where the battery pack 1000 is used in a state of being not mounted to a specific external device is a case where the battery pack 1000 is used alone without being mounted to a transportation means, and may be referred to as non-mounted use. For example, when the battery pack 1000 is used as a mobile power, this may be referred to as non-mounted use.

At this time, the portable terminal 10 may receive the information on whether or not the battery pack is in a mounted use from the user, and provide information on whether or not the battery pack is in a mounted use to the communication module 120 based on the inputted information. In this case, the user may input information on whether or not the battery pack is in a mounted use to the portable terminal 10 through an input function such as a touch screen, buttons, and voice recognition provided to the portable terminal 10. As a more specific example, the portable terminal 10 may select whether the battery pack is in a mounted use or in a non-mounted use through a display device such as an LCD, and provide the information selected by the user to the communication module 120. For example, when the user intends to use the battery pack 1000 as camping power, namely a mobile power, the user may touch a 'non-mounted use' button on the display device of the portable terminal 10. Then, the touch information may be transmitted from the portable terminal 10 to the communication module 120.

According to this configuration of the present disclosure, through communication between the portable terminal 10 and the communication module 120, it is possible to simply select whether the battery pack 1000 is mounted to a transportation means and used for driving or whether the battery pack 1000 is used as a mobile power. Moreover, according to this embodiment of the present disclosure, the user may easily input the information on the usage form of the battery pack 1000 through the portable terminal 10. In addition, according to this embodiment of the present disclosure, the battery pack 1000 may be operated appropriately according to the usage form of the battery pack 1000.

Also, the communication module 120 may be configured to receive information on the type of a transportation means to which the battery pack 1000 is mounted, as the usage information of the battery pack 1000.

For example, the communication module 120 may be configured to receive information on whether the transportation means to which the battery pack 1000 is mounted is an electric vehicle, an electric two-wheeled vehicle (motorcycle, bicycle), an electric scooter, or an electric wheel.

In addition, the information on the type of the transportation means may be configured be directly received by the portable terminal 10 from the user or to be directly provided by the portable terminal 10 itself. For example, the portable terminal 10 may be configured to list and provide a plurality of items for the type of the transportation means to the user, and the user may select one item among them. In addition, the selected information may be provided to the communication module 120.

In addition, when the information on the type of the transportation means provided from the portable terminal 10 is received as described above, the communication module 120 may be configured to transmit the information on the type of the transportation means received to the processor 130.

According to this configuration of the present disclosure, the battery pack 1000 may be controlled or operated suitably according to the type of the transportation means transmitted from the portable terminal 10 or the user. Moreover, the operating form or control configuration of the battery pack 1000 may vary depending on the type of the transportation means. According to the above embodiment, the battery pack 1000 may be operated or controlled in an optimal way according to the type of the transportation means. For example, a vehicle and an electric bicycle are the same in terms of transportation means, but their outputs or use temperature ranges may be significantly different. Therefore, depending on whether the corresponding battery pack 1000 is mounted to a vehicle or an electric bicycle, the magnitudes of available voltage, available current and/or available temperature may be set differently.

In addition, when the usage information of the battery pack 1000 received by the communication module 120 is non-mounted use, the processor 130 may be configured to set a setting value of at least one of voltage, current and temperature to be lower than that for mounted use. Here, the setting value may be a specific numerical value or a specific range.

For example, assuming that when the battery pack 1000 is used in a state of being mounted to a transportation means, the discharging voltage value set by the processor 130 may be V1, and when the battery pack 1000 is used as a mobile power without being mounted to the transportation means, the discharging voltage value set by the processor 130 is V2, V2 may be set to be lower than V1. Alternatively, assuming that when the battery pack 1000 is used in a state of being mounted to the transportation means, the range of the discharging current set by the processor 130 is 11, and when the battery pack 1000 is used as a mobile power without being mounted to the transportation means, the range of the discharging current set by the processor 130 is 12, the range of I2 may be set to be narrower than the range of I1.

According to this configuration of the present disclosure, it is possible to prevent the battery pack 1000 from being operated in an excessive voltage, current and/or temperature state. In particular, when the battery pack 1000 is used in a non-mounted state, namely as a mobile power, a smaller magnitude of voltage or current may be required compared to a case where the battery pack 1000 is mounted to a transportation means. Accordingly, when the battery pack 1000 is used in a non-mounted state, it is possible to prevent unnecessary high voltage or current from being applied. In addition, according to the above embodiment, user safety may be secured. In particular, when the battery pack is used in a non-mounted state, the user often directly manipulates the battery pack 1000, and the protection operation of the control unit provided in the transportation means may not be received. Therefore, by preventing overvoltage or overcurrent, it is possible to prevent situations such as user electric shock or spark generation from occurring.

Also, the processor 130 may be configured to change a maximum allowable value for at least one of voltage, current and temperature based on the usage information of the battery pack 1000 received by the communication module 120.

For example, the processor 130 may be configured to increase or decrease the maximum allowable value of voltage, current and/or temperature for the battery pack 1000 when the user inputs the usage information that the battery pack is mounted to an electric wheel, from the communication module 120.

Here, whether the maximum allowable value is increased or decreased may be determined in comparison with a previous usage state. For example, when the previous usage state is that the battery pack is mounted to an electric vehicle and the newly received usage information is that the battery pack is mounted to an electric wheel, the processor 130 may decrease the maximum allowable value of voltage, current and/or temperature. Meanwhile, when the previous usage state is that the battery pack is used in a non-mounted state, and the newly received usage information is that the battery pack is mounted to an electric wheel, the processor 130 may increase the maximum allowable value of voltage, current and/or temperature.

When charging and discharging the battery pack 1000, the maximum allowable value of voltage, current and/or temperature may vary according to each usage state. Thus, according to the above embodiment, by changing the maximum allowable value, the battery pack 1000 may be operated and controlled suitably in each usage state. In particular, the maximum output required for the battery pack may vary when the battery pack is used for an electric vehicle or an electric bicycle, or used as a mobile power. Therefore, by changing the maximum allowable value as in the above embodiment, the battery pack 1000 may be operated appropriately for the maximum output required in each usage state.

Also, the processor 130 may be configured to change the setting value in a state where the switching module 110 is turned off.

For example, when the processor 130 intends to change the setting value for voltage, current and/or temperature according to the usage information of the battery pack 1000 received from the communication module 120, it is possible to check whether the switching module 110 is in a turn-off state in advance before changing the setting value. In addition, when the switching module 110 is in a turn-on state, it is possible to change the setting value after turning off the switching module 110 first, or to change the setting value after waiting until the switching module 110 is turned off.

In addition, the processor 130 may be configured to turn on the switching module 110 after changing the setting value.

For example, the processor 130 may be configured such that, when changing the setting value for voltage, current and/or temperature, the switching module 110 is not turned on until the setting value is completely changed. In addition, when the setting value is completely changed, the processor 130 may control the switching module 110 to be turned on at last.

According to this embodiment of the present disclosure, by allowing the setting value to be changed in a state where the charging and discharging current does not flow in the battery pack 1000, the setting value for controlling charging and discharging of the battery pack 1000 may be changed safely. For example, if the charging and discharging current, voltage, temperature, or the like is changed while charging or discharging is being performed, the battery pack 1000 or an external device (vehicle, etc.) receiving power from the battery pack 1000 may be damaged. However, according to the above embodiment, this problem may be prevented. In addition, according to the above embodiment of the present disclosure, in a state where a charging and discharging current flows in the battery pack 1000, charging and discharging of the battery pack 1000 may be controlled stably by preventing the setting value for charging and discharging control from being changed.

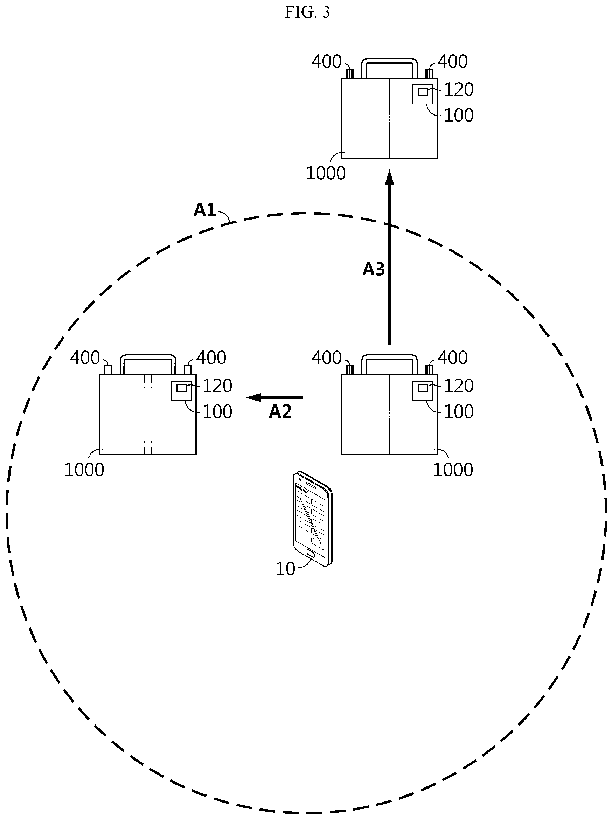

In addition, the communication module 120 may be configured to detect the change of a relative distance between the battery pack 1000 and the portable terminal 10. This will be described in more detail with reference to FIG. 3.

FIG. 3 is a diagram schematically showing an example of a configuration for detecting the change of a relative distance between the battery pack 1000 and the portable terminal 10 by the communication module 120 of the battery pack managing apparatus 100 according to an embodiment of the present disclosure.

Referring to FIG. 3, the battery pack managing apparatus 100 is mounted to the battery pack 1000 and may include the communication module 120. In this case, the communication module 120 may be configured to detect the change of the relative distance between the battery pack 1000 and the portable terminal 10. That is, the communication module 120 may be configured to detect a position change for whether the distance between the battery pack 1000 and the portable terminal 10 is increased or decreased.

Here, the communication module 120 may be configured to detect a relative distance change by identifying the location of the portable terminal 10 and the location of the battery pack 1000, respectively. For example, the communication module 120 may be configured to include a GPS (Global Positioning System) to determine the location of the battery pack 1000 itself. In addition, the communication module 120 may be configured to receive information about the location of the portable terminal 10 from the portable terminal 10. In particular, in many cases, the portable terminal 10 such as a smart phone generally has a built-in function for measuring its own location using GPS or WiFi. Therefore, the communication module 120 may determine the location of the portable terminal 10 by using the location-measuring function of the portable terminal 10. In addition, the communication module 120 may be configured to determine the distance between the battery pack 1000 and the portable terminal 10 based on the location of the battery pack 1000 and the location of the portable terminal 10, and to determine whether the distance is changed.

Alternatively, the communication module 120 may be configured to detect the change of a relative distance between the battery pack 1000 and the portable terminal 10 according to the connection of communication or the communication sensitivity. For example, the communication module 120 may be configured to enable near distance communication with the portable terminal 10 using a communication method such as Bluetooth or WiFi (Wireless Fidelity). At this time, the communication module 120 may detect that the relative distance between the battery pack 1000 and the portable terminal 10 is increased when Bluetooth or WiFi communication is cut off or the communication sensitivity is weakened. Alternatively, the communication module 120 may detect that the relative distance between the battery pack 1000 and the portable terminal 10 is decreased when the communication is reconnected or the communication sensitivity is strengthened. The communication module 120 may detect the relative distance change between the battery pack 1000 and the portable terminal 10 based on the presence or absence of a connection in a communication method with a limited communication distance or the change in a connection state.

Alternatively, the communication module 120 may be configured to detect the relative distance change between the battery pack 1000 and the portable terminal 10 through optical communication such as infrared communication. In addition, the communication module 120 may be configured to detect the change of a relative distance between the battery pack 1000 and the portable terminal 10 through various other communication methods such as WiFi.

In this configuration, the processor 130 may be configured to control the switching module 110 to turn on/off based on the relative distance change between the battery pack 1000 and the portable terminal 10.

In particular, the processor 130 may be configured to determine whether the relative distance change between the battery pack 1000 and the portable terminal 10 is greater than or equal to a criterion change amount. Here, the criterion change amount is a value to be compared with the relative distance change between the battery pack 1000 and the portable terminal 10, and may be a preset value. In addition, the criterion change amount may be stored in advance in the storage module 140 or a memory of the processor 130.

In this case, the criterion change amount may be set as a distance capable of allowing communication between the communication module 120 and the portable terminal 10. For example, when the communication module 120 and the portable terminal 10 are configured to communicate with each other using the Bluetooth communication method, the distance change between the communication module 120 and the portable terminal 10 to an area where the Bluetooth communication is possible may be set as the criterion change amount. For example, when the communicable distance between the communication module 120 and the portable terminal 10 is expressed based on the portable terminal 10, it may be as indicated by A1 in FIG. 3. In this case, the specific area as indicated by A1, namely the communicable area, may be referred to as a range set as the criterion change amount.

In this case, when the communication module 120 changes its location within the communication area indicated by A1, the processor 130 may determine that the relative distance change between the battery pack 1000 and the portable terminal 10 is less than the criterion change amount. For example, when the battery pack 1000 changes its location as indicated by arrow A2, there is a relative distance change between the battery pack 1000 and the portable terminal 10, but it is a change within the communication area A1, so this may be judged as being less than the criterion change amount. However, when the battery pack 1000 changes its location as indicated by arrow A3, it may be regarded that the battery pack 1000 is out of the communication area between the communication module 120 and the portable terminal 10. Therefore, in this case, it may be judged that the relative distance change between the battery pack 1000 and the portable terminal 10 is equal to or greater than the criterion change amount or exceeds the criterion change amount.

According to this configuration of the present disclosure, it may be easily figured out whether the battery pack 1000 has moved away from the portable terminal 10 beyond a certain level. That is, according to the configuration of the battery pack managing apparatus 100 of the present disclosure, the communication module 120 is configured to communicate with the portable terminal 10, and by using the communication function of the communication module 120, the relative distance change between the battery pack 1000 and the portable terminal 10 may be detected. Therefore, even if a special configuration or function is not additionally included in the battery pack managing apparatus 100 and the portable terminal 10, it may be easily figured out whether the relative distance change between the communication module 120 and the portable terminal 10 is equal to or greater than the criterion change amount.

In addition, the configuration for judging whether the relative distance change between the battery pack 1000 and the portable terminal 10 is greater than or equal to the criterion change amount may be implemented in various other forms.

For example, criterion sensitivity for the communication sensitivity between the battery pack 1000 and the portable terminal 10 may be preset as the criterion change amount. In addition, the processor 130 may be configured to receive the communication sensitivity between the battery pack 1000 and the portable terminal 10 from the communication module 120 and determine whether the relative distance change between the battery pack 1000 and the portable terminal 10 is greater than or equal to the criterion change amount by comparing the received communication sensitivity with the criterion sensitivity.

As another example, the communication module 120 may be configured to directly measure and figure out the distance between the battery pack 1000 and the portable terminal 10 through a GPS device or the like. In addition, the distance information measured in this way may be transmitted to the processor 130. Then, the processor 130 may compare the measurement distance transmitted from the communication module 120 with a criterion distance stored in advance, and judge that the relative distance change between the battery pack 1000 and the portable terminal 10 is equal to or greater than the criterion change amount if the measurement distance exceeds the criterion distance.

If the relative distance change between the battery pack 1000 and the portable terminal 10 is figured out as being equal to or greater than the criterion change amount, the processor 130 may be configured to turn off the switching module 110.

For example, in the embodiment of FIG. 3, the battery pack 1000 may be used in a state where the switching module 110 is turned on, and then if the battery pack 1000 is moved as indicated by the arrow A3 so that the relative distance change between the battery pack 1000 and the portable terminal 10 becomes equal to or greater than the criterion change amount, the processor 130 may control the switching module 110 to turn off. That is, if the battery pack 1000 is moved as indicated by the arrow A3, the processor 130 may prevent the charging and discharging current from flowing to the battery pack 1000. Therefore, in this case, the battery pack 1000 may no longer be usable.

Meanwhile, in the embodiment of FIG. 3, if the battery pack 1000 is moved as indicated by the arrow A2 while the battery pack 1000 is being used in a state where the switching module 110 is turned on, the relative distance change between the battery pack 1000 and the portable terminal 10 becomes is less than the criterion change amount. In this case, the processor 130 may control the switching module 110 not to turn off and maintain the turn-on state as it is. Accordingly, in this case, the battery pack 1000 may be continuously usable.

According to this configuration of the present disclosure, since the switching module 110 is controlled to turn off according to the relative distance between the battery pack 1000 and the portable terminal 10, the use safety of the battery pack 1000 may be secured. In particular, since the portable terminal 10 is usually carried by the user, the distance between the portable terminal 10 and the battery pack 1000 may be predicted as the distance between the user and the battery pack 1000. Therefore, if the relative distance change between the battery pack 1000 and the portable terminal 10 is equal to or greater than the criterion change amount, the battery pack 1000 may be regarded as being no longer managed by the user, and the use of the battery pack 1000 may be stopped. Meanwhile, if the relative distance change between the battery pack 1000 and the portable terminal 10 is less than the criterion change amount, the battery pack 1000 is still in a state of being managed by the user, so the battery pack 1000 may be continuously usable even though the relative location of the battery pack 1000 to the portable terminal 10 is somewhat changed.

In addition, according to the above embodiment of the present disclosure, the use of the battery pack 1000 may be disabled when the battery pack 1000 is stolen, thereby preventing the battery pack 1000 from being stolen. For example, if the battery pack 1000 is used as a mobile power at a campsite or the like, even if the battery pack 1000 is stolen while the user is sleeping, if the battery pack 1000 is separated from the user by a certain distance, the stolen battery pack 1000 may no longer be used. Therefore, this may ultimately bring the anti-theft effect to the battery pack 1000.

To this end, when the switching module 110 is turned off because the relative distance change between the battery pack 1000 and the portable terminal 10 exceeds the criterion change amount, in order to turn on the switching module 110, the processor 130 may be configured to obtain authorization for turning on the switching module 110 from portable terminal 10 through the communication module 120. For example, if the switching module 110 is turned off because the relative distance change between the battery pack 1000 and the portable terminal 10 is judged as being equal to or greater than the criterion change amount, even though the relative distance change between the battery pack 1000 and the portable terminal 10 is changed to be less than the criterion change amount, the processor 130 may be configured not to immediately turn on the switching module 110. At this time, the processor 130 may request the portable terminal 10 through the communication module 120 to confirm whether or not to turn on the switching module 110. In addition, when an authorization request is received from the portable terminal 10 to the communication module 120 as a response to the confirmation request, the processor 130 may be configured to turn on the switching module 110 at last.

In addition, if the relative distance change between the battery pack 1000 and the portable terminal 10 is equal to or greater than the criterion change amount, the communication module 120 may be configured to transmit warning information to the portable terminal 10. In this case, the communication module 120 may transmit the warning information by itself or under the control of the processor 130.

For example, in the embodiment in which the communication module 120 judges whether the relative distance change between the battery pack 1000 and the portable terminal 10 is greater than or equal to the criterion change amount based on the communication sensitivity with the portable terminal 10, if the communication sensitivity is less than the criterion sensitivity, the communication module 120 may be configured to transmit warning information to the portable terminal 10. In addition, this warning information may be expressed in the form of text, graphic, or the like through a display device of the portable terminal 10, or in the form of a warning sound through a speaker of the portable terminal 10, and be informed to the user of the portable terminal 10.

As another example, when the communication module 120 detects a relative distance change between the battery pack 1000 and the portable terminal 10 through a GPS device or the like, if the detected relative distance change is equal to or greater than the criterion change amount, the communication module 120 may be configured to send warning information to the portable terminal 10.

According to this embodiment of the present disclosure, since the user may detect the relative distance change between the battery pack 1000 and the portable terminal 10, it is possible to effectively prevent the battery pack 1000 from being stolen. In addition, according to this configuration of the present disclosure, before a situation in which the user cannot control the battery pack 1000 through the portable terminal 10 occurs, the user may recognize this and appropriately control the battery pack 1000 in advance.

In addition, the battery pack managing apparatus 100 according to the present disclosure may further include a warning module.

The warning module may be configured to express warning information. For example, the warning module may be configured to include a speaker to generate a warning sound from the battery pack 1000 itself. Alternatively, the warning module may include a lamp or a display device, and may be configured to turn on the lamp or display a warning message.

In particular, the warning module may be configured to express the warning information when the relative distance change between the battery pack 1000 and the portable terminal 10 is greater than or equal to the criterion change amount. In this case, the warning information may be expressed based on the control of the processor 130 or a signal transmitted from the processor 130. For example, when the battery pack 1000 moves away from the portable terminal 10 beyond a certain level, the processor 130 may transmit this information to the warning module. Then, the warning module may be configured to notify the surrounding of the fact by generating a warning sound or the like.

According to this configuration of the present disclosure, it may be immediately displayed that the battery pack 1000 is moving away from the portable terminal 10 by a certain level or more. Therefore, the user may figure out this fact and take appropriate action. Moreover, according to the above embodiment, when the battery pack 1000 is stolen, the fact may be immediately transmitted to the surroundings through an alarm sound or the like, thereby further improving the anti-theft effect.

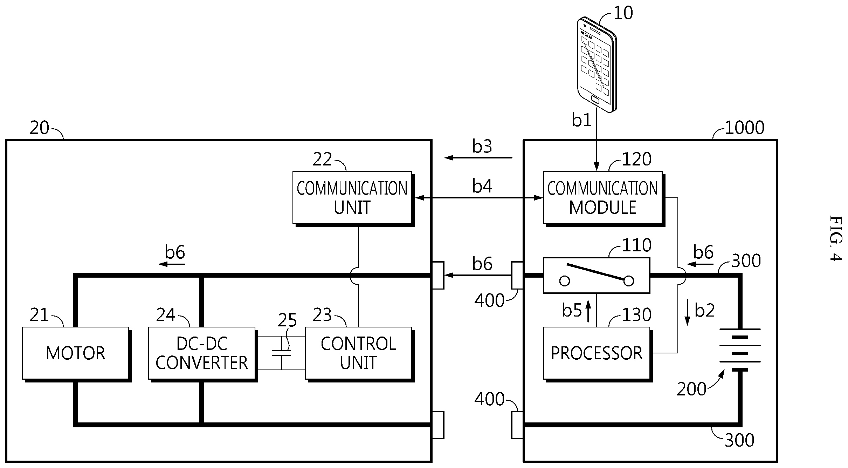

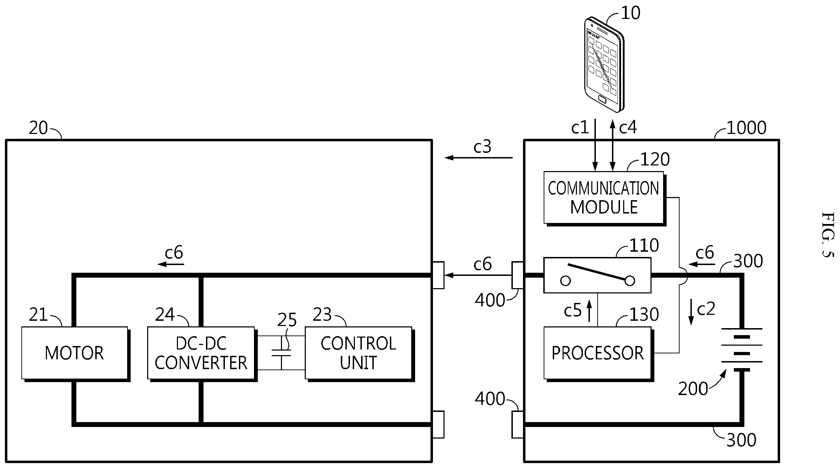

The battery pack 1000 including the battery pack managing apparatus 100 according to the present disclosure may be configured to be mounted to a transportation means. In particular, the battery pack 1000 including the battery pack managing apparatus 100 according to the present disclosure may be configured to be compatible with a plurality of types of transportation means. For example, the battery pack 1000 according to the present disclosure may be configured to be mounted to at least one transportation means such as an electric vehicle, an electric two-wheeled vehicle, an electric bicycle, an electric scooter, an electric wheelchair, and the like. In this case, the switching module 110 may be controlled by the processor 130 differently depending on whether the transportation means includes a control unit capable of communicating with the communication module 120. This will be described in more detail with reference to FIGS. 4 and 5. In the embodiment of FIGS. 4 and 5, features identical or similar to those of the former embodiment will be not described or briefly described, and features different from the former embodiment will be described in detail.

FIG. 4 is a diagram schematically showing an example of a configuration and operation of the battery pack managing apparatus 100 according to an embodiment of the present disclosure, when the battery pack 1000 is mounted to a transportation means 20.

Referring to FIG. 4, a control unit 23 is included in the transportation means 20 to which the battery pack 1000 is mounted. In particular, in the embodiment of FIG. 4, the control unit 23 of the transportation means 20 is connected to the communication unit 22 and configured to communicate with the communication module 120 of the battery pack managing apparatus 100. For example, in an electric vehicle or an electric two-wheeled vehicle, an ECU (Electronic Control Unit) may be mounted as the control unit 23, and the ECU may include the communication unit 22 itself or be connected to an external communication unit 22 to allow communication. FIG. 4 may be an embodiment in which the control unit 23 of the transportation means 20 such as the ECU is configured to enable communication, in particular wireless communication.

In this embodiment of FIG. 4, first, as indicated by arrow b 1, the communication module 120 may receive the usage information of the battery pack 1000 from the portable terminal 10. For example, the user may input information that the battery pack 1000 will be mounted to an electric vehicle and used to the portable terminal 10, as the usage information of the battery pack 1000. In addition, the information input in this way may be transmitted from the portable terminal 10 to the communication module 120 and then transmitted to the processor 130 as indicated by arrow b2. Then, based on the usage information, the processor 130 may set the maximum allowable current, voltage and/or temperature of the battery pack 1000 suitable for the specifications of the electric vehicle through the setting of a protection circuit or the like provided to the battery pack managing apparatus 100 or the battery pack 1000.

In addition, as indicated by arrow b3, if the battery pack 1000 is mounted to the transportation means 20 (an electric vehicle, or the like), the communication unit 22 of the transportation means 20 may communicate with the communication module 120 of the battery pack 1000, as indicated by the arrow b4. For example, the communication module 120 may be configured to transmit a response request signal to the control unit 23 through the communication unit 22 in a state where the battery pack 1000 is mounted to the electric vehicle, and the control unit 23 may be configured to transmit a response signal corresponding to the response request signal to the communication module 120 through the communication unit 22.

In addition, if the control unit 23 transmits the response signal to the communication module 120 through the communication unit 22 as described above, the processor 130 may be configured to control the switching module 110 based on the signal of the control unit 23.

For example, when a response signal is received from the control unit 23, the processor 130 may transmit a turn-on signal to the switching module 110 to turn on the switching module 110 as indicated by arrow b5. Then, as indicated by arrow b6, a driving power is supplied from the secondary battery 200 of the battery pack 1000 to the motor 21, so that the transportation means 20 such as an electric vehicle may be driven.

Alternatively, the processor 130 may be configured to control the switching module 110 to turn on or off under the control of the control unit 23.

For example, when a driving power supply request signal is transmitted from the control unit 23 to the communication module 120 via the communication unit 22, the processor 130 may turn on the switching module 110. Alternatively, when a driving power supply stop signal is transmitted from the control unit 23 to the communication module 120 via the communication unit 22, the processor 130 may turn off the switching module 110.

FIG. 5 is a diagram schematically showing another example of a configuration and operation of the battery pack managing apparatus 100 according to an embodiment of the present disclosure, when the battery pack 1000 is mounted to a transportation means 20. In this embodiment, features different from the former embodiment will be described in detail.

Referring to FIG. 5, the control unit 23 is included in the transportation means 20 to which the battery pack 1000 is mounted, but the communication unit 22 that enables the control unit 23 to communicate with the communication module 120 is not included in the transportation means 20. That is, in the embodiment of FIG. 5, it may be regarded that the control unit 23 is not configured to communicate with the communication module 120, and that the transportation means 20 does not include another control unit 23 capable of communicating with the communication module 120. For example, in the case of an electric scooter or an electric wheel, the control unit 23 capable of communicating with an external device may not be mounted.

In this embodiment of FIG. 5, first, as indicated by arrow c1, the communication module 120 may receive the usage information of the battery pack 1000 from the portable terminal 10. For example, the user may input information that the battery pack 1000 will be mounted to an electric scooter and used to the portable terminal 10, as the usage information of the battery pack 1000. In addition, the information input in this way may be transmitted from the portable terminal 10 to the communication module 120 and then transmitted to the processor 130 as indicated by arrow c2. Then, based on the usage information, the processor 130 may set the maximum allowable current, voltage and/or temperature of the battery pack 1000 suitable for the specifications of the electric scooter through setting of the protection circuit or the like provided in the battery pack managing apparatus 100 or the battery pack 1000.

In addition, as indicated by arrow c3, the battery pack 1000 may be mounted to the transportation means 20 (an electric scooter, or the like). At this time, the transportation means 20 includes the control unit 23, and the control unit 23 may be configured not to communicate with the communication module 120. Accordingly, the communication module 120 is not able to communicate with the transportation means 20. In this case, the communication module 120 may be configured to communicate with the portable terminal 10 again. For example, as indicated by arrow c4 in FIG. 5, the communication module 120 may send and receive a signal for switching control with the portable terminal 10. More specifically, the communication module 120 may be configured to transmit a confirmation request signal whether or not to supply a driving power to the portable terminal 10 and receive a driving power supply request signal from the portable terminal 10 as a response signal.

In addition, if the portable terminal 10 transmits a control signal such as a power supply request signal to the communication module 120, the processor 130 may be configured to control the switching module 110 based on the control signal of the portable terminal 10.

For example, when the transportation means 20 is an electric scooter, the user may request the operation of the electric scooter by using the portable terminal 10 as indicated by arrow c4. Then, the communication module 120 may receive this request signal, and transmit information indicating that the request signal is received to the processor 130. In this case, the processor 130 may transmit a turn-on signal to the switching module 110 so that the switching module 110 is turned on, as indicated by arrow c5. If the switching module 110 is turned on as above, as indicated by arrow c6, a driving power may be supplied from the battery pack 1000 to the electric scooter.

According to this configuration of the present disclosure, if the control unit 23 is not provided in the transportation means 20, or if the control unit 23 is provided but the control unit 23 is not communicable, the switching module 110 may be controlled to turn on/off by the portable terminal 10. Therefore, the user may easily control whether or not to supply the power of the battery pack 1000 by using the portable terminal 10.

In particular, in this configuration, the processor 130 may be configured to be based on the control signal of the portable terminal 10 in the process of initially turning on the switching module 110, when the transportation means 20 starts driving. In addition, the processor 130 may be configured to be based on the control signal of the portable terminal 10 in the process of finally turning off the switching module 110, when the operation of the transportation means 20 is terminated.

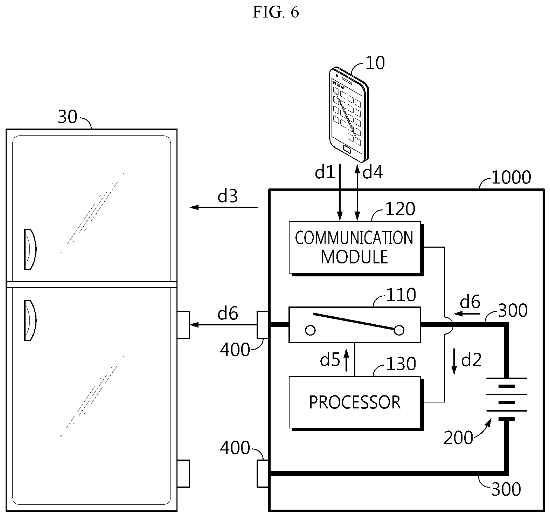

FIG. 6 is a diagram schematically showing still another example of a configuration and operation of the battery pack managing apparatus 100 according to an embodiment of the present disclosure, when the battery pack 1000 is in non-mounted use. In this embodiment, features different from the former embodiment will be described in detail.

Referring to FIG. 6, the battery pack 1000 may be configured to be in non-mounted use without being mounted to the transportation means 20. In other words, the battery pack 1000 may be configured to supply a power in a state of being mounted to the transportation means 20 as shown in FIGS. 4 and 5, and may also be configured to supply a power in a state of being not mounted to the transportation means 20 as shown in FIG. 6. For example, the battery pack 1000 may be configured to be mounted to a vehicle to provide a driving force for operating the vehicle, and be separated from the vehicle and supply a driving power to an electronic product such as a portable refrigerator (a camping refrigerator).

If the battery pack 1000 is in non-mounted use as a mobile power as above, the processor 130 may be configured to control the switching module 110 based on a signal of the portable terminal 10, similarly to the former embodiment of FIG. 5.

That is, as indicated by arrow d1 in FIG. 6, the communication module 120 may receive the usage information of the battery pack 1000 from the portable terminal 10. For example, the user may input the non-mounted use, namely information that the secondary battery will be used as a mobile power, to the portable terminal 10, as the usage information of the battery pack 1000. Moreover, the user may input additional information on the specific type of the non-mounted use to the portable terminal 10 as the usage information of the battery pack 1000. For example, the user may input information that the battery pack 1000 is used as a mobile power and is used as a power source of a portable refrigerator to the portable terminal 10.

Then, the communication module 120 may transmit the usage information of the battery pack 1000 received from the portable terminal 10 to the processor 130 as indicated by arrow d2. Then, the processor 130 may set the maximum allowable current, voltage and/or temperature of the battery pack 1000 through setting of a protection circuit or the like provided in the battery pack managing apparatus 100 or the battery pack 1000 based on the received usage information. For example, the processor 130 may change and set the maximum allowable current of the battery pack 1000 as a specification suitable for a portable refrigerator.

In addition, as indicated by arrow d3 in FIG. 6, when the battery pack 1000 is mounted to a portable refrigerator, the communication module 120 may transmit and receive a signal for switching control with the portable terminal 10, as indicated by arrow d4. More specifically, the communication module 120 may be configured to transmit a confirmation request signal on whether or not to supply a driving power to the portable terminal 10 and receive a driving power supply request signal from the portable terminal 10 as a response signal.

In addition, if the portable terminal 10 transmits a control signal such as a power supply request signal to the communication module 120, the processor 130 may be configured to control the switching module 110 based on the control signal of the portable terminal 10.

For example, the user may request to supply a power to an electronic product 30, as indicated by arrow d4, by using the portable terminal 10. Then, the communication module 120 may receive the request signal and transmit information indicating that the request signal has been received to the processor 130. In this case, the processor 130 may transmit a turn-on signal to the switching module 110 so that the switching module 110 is turned on, as indicated by arrow d5. If the switching module 110 is turned on as above, as indicated by arrow d6, a driving power may be supplied from the battery pack 1000 to the electronic product 30.

According to this configuration of the present disclosure, when the battery pack 1000 is used as a mobile power, by at least partially controlling the switching module 110 through the portable terminal 10, the battery pack 1000 may be operated efficiently and stably. In particular, according to the above embodiment, since the user may control the switching module 110 of the battery pack 1000 to turn on/off through the portable terminal 10, it is possible to effectively prevent an electric shock accident from occurring against the user.

Meanwhile, the communication module 120 may be configured to search whether a communicable control unit 23 exists, when the battery pack 1000 is mounted to the transportation means 20. For example, when the battery pack 1000 is mounted to the transportation means 20, the communication module 120 may search whether a communicable control unit 23 (e.g., ECU) is provided in the transportation means 20. In addition, if a communicable control unit 23 is detected, the processor 130 may be configured to turn on or off the switching module 110 according to the signal from the control unit 23, as shown in FIG. 4. Meanwhile, if the communicable control unit 23 is not detected, the processor 130 may be configured to turn on or off the switching module 110 under the control of the portable terminal 10 as shown in FIG. 5 or 6.

According to this configuration of the present disclosure, depending on whether the communicable control unit 23 is provided in the transportation means 20, the method of controlling the switching module 110 by the processor 130 may vary. In particular, according to the above embodiment, the switching module 110 may be controlled more stably by the processor 130. In particular, an electric vehicle or the like often includes a communicable control unit 23, and in this case, the control performance of the control unit 23 may be high. Accordingly, by allowing the switching module 110 to be controlled under the control of the high-performance control unit 23, the switching module 110 may be controlled more effectively.

In addition, according to the above embodiments, the battery pack 1000 including the battery pack managing apparatus 100 according to the present disclosure may be operated under appropriate control according to various usage forms, for example as being mounted to at least one transportation means 20 or used as a mobile power. Moreover, the switching module 110 may be controlled under the control of the control unit 23 of the transportation means 20 or the portable terminal 10 for each usage form. In particular, when the battery pack 1000 is utilized as a mobile power or the control unit 23 of the transportation means 20 does not include a communication function, the switching module 110 may be controlled based on the portable terminal 10. Therefore, according to this embodiment, the battery pack 1000 may be used more stably and safely.

In addition, when the turn-on state of the switching module 110 continues, the communication module 120 may be configured to allow the portable terminal 10 to confirm whether the turn-on state of the switching module 110 is maintained, after a predetermined time passes from the time point when the switching module 110 is turned on. At this time, the communication module 120 may transmit a confirmation signal to the portable terminal 10 periodically or aperiodically.

In this case, the portable terminal 10 may transmit a response signal on whether the turn-on state of the switching module 110 is maintained, to the communication module 120 by itself or based on an input of the user. In addition, the communication module 120 may transmit related information to the processor 130 based on the response signal.

In particular, when the battery pack 1000 is mounted to the transportation means 20 that is not equipped with the control unit 23 capable of communicating with the communication module 120 or the battery pack 1000 is used in a non-mounted state, if the power supply state continues for a certain period of time or more, the communication module 120 may transmit inquiry information on whether or not to maintain the turn-on state of the switching module 110 continuously to the portable terminal 10. For example, the communication module 120 may transmit information asking whether or not to continuously supply a power to the portable terminal 10, if the turn-on state of the switching module 110 continues for 3 hours or more in a situation where the battery pack 1000 is used as a mobile power.

At this time, when the portable terminal 10 transmits a response signal to the communication module 120 indicating that the turn-on state of the switching module 110 is maintained, the communication module 120 may transmit power supply maintenance information to the processor 130. Then, the processor 130 may maintain the turn-on state of the switching module 110 as it is. Meanwhile, if the portable terminal 10 transmits a response signal indicating that the switching module 110 will not maintain the turn-on state to the communication module 120 or does not transmit a response signal to the communication module 120 for a predetermined time, the communication module 120 may transmit information indicating this fact to the processor 130. Then, the processor 130 may control the switching module 110 to be turned off.

According to this configuration of the present disclosure, in a situation where there is a possibility that the battery pack 1000 is not continuously used, an unnecessary power supply state of the battery pack 1000 may be released by inquiring whether or not to continuously use the battery pack 1000. Moreover, in this case, an electric shock accident caused by the battery pack 1000 may be more effectively prevented.

In addition, the processor 130 may be configured to provide a usable time of the battery pack 100 for each usage form.

For example, by distinguishing the usable time of the battery pack 1000 when the battery pack 1000 is mounted to the transportation means 20 (mounted use) and the usable time of the battery pack 1000 when the battery pack 1000 is used as a mobile power (non-mounted use), the processor 130 may transmit the corresponding information to the portable terminal 10. For example, the processor 130 may provide information to the portable terminal 10 indicating that the battery pack 1000 is usable for 3 hours at present when being used in a state of being mounted to the transportation means 20 and is usable for 10 hours when being used as a mobile power in a non-mounted state.

Moreover, even in an environment in which the battery pack 1000 is mounted to the transportation means 20 and used, the processor 130 may be configured to distinguish the usable time of the battery pack 1000 according to the type of the transportation means 20 to which the battery pack 1000 is mounted and provide the distinguished usable time to the communication module 120. For example, the processor 130 may provide information to the portable terminal 10 indicating that the battery pack 1000 is usable for 2 hours at present when being used in a state of being mounted to an electric vehicle and is usable for 5 hours when being used in a state of being mounted to an electric motorcycle.

In this case, various techniques for estimating the usable time of the battery pack 1000 known at the time of filing of this application may be employed in the present disclosure. For example, the usable time of the battery pack 1000 may be estimated using various SOC (State Of Charge) or SOH (State Of Health) estimation configurations known at the time of filing of this application.

According to this configuration of the present disclosure, in a situation where the battery pack 1000 is used in a specific usage form, the usable time of the battery pack 1000 may be provided not only in a case where the battery pack 1000 is continuously used in the corresponding usage form but also in a case where the usage form is changed to another usage form. Accordingly, since the usable time of the battery pack 1000 is predicted in preparation to the case where the usage form of the battery pack 1000 is changed in the future, the user may effectively predict whether the battery pack 1000 can be continuously used or needs to be charged. For example, in a state where the battery pack 1000 is used as a mobile power, if the user intends to use the battery pack 1000 as a power for driving an electric vehicle in the future, the user may easily judge whether the SOC of the current battery pack 1000 is sufficient.

Meanwhile, the communication module 120 may be configured to communicate with the transportation means 20 or the portable terminal 10 in a near distance wireless communication type such as RFID (Radio Frequency IDentification) or NFC (Near Field Communication).

Here, the communication module 120 may be implemented as an RFID reader or an NFC reader. In this case, an RFID tag or an NFC tag may be provided in the transportation means 20 or the portable terminal 10. The RFID tag or the NFC tag may be separately attached to the transportation means 20 or the portable terminal 10, and the transportation means 20 or the portable terminal 10 may be configured to perform such a tag function. In particular, recently, the portable terminal 10 such as a smartphone often provides an NFC tag function. In addition, electronic components in the form of easy implementing an RFID tag or NFC tag function may be recently mounted to the transportation means 20 such as an electric vehicle or an electric scooter.

According to this configuration of the present disclosure, even if a separate power is not supplied from the transportation means 20 or the portable terminal 10, the communication between the communication module 120 and the transportation means 20, or the communication between the communication module 120 and the portable terminal 10, may be established using the power of the battery pack managing apparatus 100, particularly the power of the battery pack 1000. In particular, the communication module 120 may be provided to the battery pack 1000 to be easily supplied with a power from the secondary battery 200. Accordingly, even in a situation where the power of the transportation means 20 or the portable terminal 10 is absent or insufficient, the communication between the communication module 120 and the transportation means 20 and/or the portable terminal 10 may be established using the power of the battery pack 1000 itself.

In particular, as shown in FIGS. 4 and 5, the transportation means 20, for example an electric vehicle, may include an auxiliary battery 25 for supplying a power to the control unit 23 or the communication unit 22. However, when the auxiliary battery 25 is discharged, the control unit 23 or the communication unit 22 may not operate properly. In addition, if the control unit 23 or the communication unit 22 does not operate properly, the driving control such as the power supply control of the transportation means 20 may not be performed, so that the transportation means 20 may not be driven. However, according to the above embodiment, this problem may be prevented.

More specifically, seeing the configuration shown in FIG. 4, the control unit 23 and the communication unit 22 are provided to the transportation means 20 along with the auxiliary battery 25, and in this case, the communication unit 22 may be configured to store charging information of the auxiliary battery 25. In particular, when the auxiliary battery 25 is discharged, the communication unit 22 may be configured to store discharging information of the auxiliary battery 25. Moreover, the communication unit 22 may be implemented in the form of a passive RFID tag or an NFC tag so that the corresponding information may be read even without a separate power.

In this state, even when the auxiliary battery 25 is fully discharged, the communication module 120 of the battery pack managing apparatus 100 may read information of the communication unit 22, especially the discharging information of the auxiliary battery 25, by using the power of the secondary battery 200 provided to the battery pack 1000. In this case, the communication module 120 may transmit the fact that the auxiliary battery 25 is discharged to the processor 130. In addition, the processor 130 may control the switching module 110 to supply a power from the battery pack 1000 to the transportation means 20, particularly to the auxiliary battery 25, so that the auxiliary battery 25 is charged. Then, the control unit 23 and the communication unit 22 may drive and control the transportation means 20 by receiving the power from the auxiliary battery 25 and exchanging data with the processor 130.

According to this configuration of the present disclosure, even when the auxiliary battery 25 of the transportation means 20 is fully discharged, the communication between the communication module 120 and the communication unit 22 is possible using the power of the battery pack 1000 itself, so that the power may be supplied to the transportation means 20 using the battery pack 1000.

In addition, the communication module 120 may be configured to receive the usage information of the battery pack 1000 from the portable terminal 10 in a near-distance wireless communication method. For example, the portable terminal 10 is implemented to perform a function as an RFID tag or an NFC tag, and may store the information related to the mounted use, namely information on whether the battery pack 1000 is used in a state of being mounted to the transportation means 20 (mounted use) or the pack 1000 is used as a mobile power (non-mounted use), as the usage information of the battery pack 1000. Alternatively, the portable terminal 10 may store information on the type of the transportation means 20 to which the battery pack 1000 is to be mounted, as the usage information of the battery pack 1000. For example, the portable terminal 10 may provide the information about the transportation means 20 to which the battery pack 1000 is to be mounted and used, such as an electric vehicle, an electric motorcycle, an electric bicycle, an electric scooter or an electric wheel, to the communication module 120 as an RFID tag or NFC tag.

According to this embodiment of the present disclosure, the usage information of the battery pack 1000 may be easily transferred to the communication module 120 just by locating or tagging the portable terminal 10 in the vicinity of the battery pack 1000.

The battery pack managing apparatus 100 according to the present disclosure may be employed inside the battery pack 1000. That is, the battery pack 1000 according to the present disclosure may include the battery pack managing apparatus 100 according to the present disclosure described above. In addition, the battery pack 1000 according to the present disclosure may further include components typically included in the battery pack 1000, for example at least one secondary battery 200, a power supply terminal 400 (a pack terminal), a power supply path 300 that is a path for supplying a charging and discharging power between the secondary battery 200 and the power supply terminal 400, a current sensor, a relay, and the like. In addition, the battery pack 1000 according to the present disclosure may further include various control elements known at the time of filing of this application, such as a battery management system (BMS). In this case, the processor 130 of the battery pack managing apparatus 100 according to the present disclosure may be implemented to perform at least some operations as a battery management system.

In particular, the battery pack 1000 according to the present disclosure may be configured to be detachably attached to a transportation means 20, for example a vehicle. That is, the battery pack 1000 according to the present disclosure may be mounted to a vehicle or separated from the vehicle. Moreover, the battery pack 1000 according to the present disclosure may be configured in the form of an interchangeable battery pack 1000 configured to be freely mounted to or detached from the same type of vehicles or different types of vehicles. To this end, the battery pack 1000 according to the present disclosure may be configured to be not only electrically coupled to the vehicle but also mechanically coupled to a part of the vehicle in order to maintain the electrically coupled state. However, the present disclosure is not specifically limited with respect to the mechanical and/or electrical coupling form of the battery pack 1000 and the vehicle, and various electrical and/or mechanical coupling types known at the time of filing of this application may be employed in the present disclosure. In addition, the battery pack 1000 according to the present disclosure may be configured to be compatible with transportation means 20 other than vehicle 20, for example various devices such as an electric motorcycle, an electric bicycle, an electric scooter and an electric wheelchair.

In addition, the battery pack managing apparatus 100 according to the present disclosure may be employed in a vehicle, particularly an electric vehicle driven by electricity. That is, the vehicle according to the present disclosure may include the battery pack managing apparatus 100 according to the present disclosure described above. Here, the battery pack managing apparatus 100 may be provided inside the battery pack 1000 mounted to a vehicle, but at least some components thereof may be provided outside the battery pack 1000. In addition, the vehicle according to the present disclosure may further include other various devices, such as the control unit 23, the auxiliary battery 25, the motor 21, the connection terminal, a DC-DC converter 24, and the like, in addition to the battery pack managing apparatus 100. In addition, the vehicle according to the present disclosure may further employ various vehicle components known at the time of filing of this application.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

10: portable terminal
20: transportation means
21: motor, 22: communication unit, 23: control unit, 24: DC-DC converter, 25: auxiliary battery
30: electronic product
100: battery pack managing apparatus
110: switching module
120: communication module
130: processor
140: storage module
200: secondary battery
300: power supply path
400: power supply terminal
1000: battery pack

## Claims

1. A battery pack managing apparatus, which manages a battery pack configured to include at least one secondary battery and supply a power to the outside through a power supply path, the battery pack managing apparatus comprising:
a switching module provided on the power supply path and configured to selectively turn on/off the power supply path;
a communication module configured to communicate with a portable terminal and receive usage information of the battery pack from the portable terminal; and
a processor configured to change a setting value of at least one of voltage, current and temperature preset for the battery pack based on the usage information received by the communication module and control the switching module according to the changed setting value.

2. The battery pack managing apparatus according to claim 1,
wherein the communication module is configured to receive information on whether the battery pack is in a mounted use, as the usage information of the battery pack.

3. The battery pack managing apparatus according to claim 2,
wherein the communication module is configured to receive information on the type of a transportation means to which the battery pack is mounted, as the usage information of the battery pack.

4. The battery pack managing apparatus according to claim 2,
wherein when the usage information of the battery pack received by the communication module is a non-mounted use, the processor is configured to set the setting value of the at least one of voltage, current and temperature to be lower than the case of the mounted use.

5. The battery pack managing apparatus according to claim 1,
wherein the processor is configured to change a maximum allowable value for the at least one of voltage, current and temperature, based on the usage information.

6. The battery pack managing apparatus according to claim 1,
wherein the processor is configured to change the setting value in a state where the switching module is turned off, and turn on the switching module after the setting value is changed.

7. The battery pack managing apparatus according to claim 1,
wherein the communication module is configured to detect a relative distance change between the battery pack and the portable terminal.

8. The battery pack managing apparatus according to claim 7,
wherein the processor is configured to turn off the switching module, when the relative distance change between the battery pack and the portable terminal is equal to or greater than a criterion change amount.

9. The battery pack managing apparatus according to claim 7,
wherein the communication module is configured to transmit warning information to the portable terminal, when the relative distance change between the battery pack and the portable terminal is equal to or greater than a criterion change amount.

10. The battery pack managing apparatus according to claim 1,
wherein when the battery pack is configured to be mounted to a transportation means that includes a control unit configured to communicate with the communication module, the processor is configured to control the switching module based on a signal of the control unit.

11. The battery pack managing apparatus according to claim 10,
wherein when the transportation means to which the battery pack is mounted does not include a control unit capable of communicating with the communication module or the battery pack is used without being mounted to the transportation means, the processor is configured to control the switching module based on a signal of the portable terminal.

12. A battery pack, comprising the battery pack managing apparatus according to any one of claims 1 to 11.

13. A vehicle, comprising the battery pack managing apparatus according to any one of claims 1 to 11.
